# EUROPEAN PATENT APPLICATION

(11) **EP 4 730 483 A1**
(43) Date of publication of application: **22.04.2026**
(21) Application number: 25196321.1
(22) Date of filing: 18.08.2025
(51) Int. Cl.: H01M 10/613, H01M 50/209, H01M 50/249, H01M 50/342, H01M 50/358, H01M 50/30

(54) **POWER STORAGE DEVICE**

(30) Priority: 02.10.2024 JP 2024173314
(71) Applicant: TOYOTA JIDOSHA KABUSHIKI KAISHA, Toyota-shi, Aichi-ken 471-8571 (JP)
(72) Inventor: IWATA, Makoto, Toyota-shi, Aichi-ken 471-8571 (JP); ISHIKAWA, Shotaro, Toyota-shi, Aichi-ken 471-8571 (JP); FUJIWARA, Shunsuke, Toyota-shi, Aichi-ken 471-8571 (JP); NAKAMURA, Soichiro, Toyota-shi, Aichi-ken 471-8571 (JP); NAKANO, Takahiko, Toyota-shi, Aichi-ken 471-8571 (JP); SUZUKI, Kosuke, Toyota-shi, Aichi-ken 471-8571 (JP); ISHIZUKA, Masahiro, Toyota-shi, Aichi-ken 471-8571 (JP); MATSUO, Kensuke, Toyota-shi, Aichi-ken 471-8571 (JP); KUMAZAWA, Kazuya, Toyota-shi, Aichi-ken 471-8571 (JP)
(74) Representative: TBK

(57) **Abstract**

A power storage device (10) includes a plurality of power storage cells (100), a bottom wall (212), a panel member (230) that cooperates with the bottom wall (212) to define an emission path (S), and a protective member (500). Each power storage cell (100) has a lower surface provided with a safety valve (SV). The bottom wall (212) has a plurality of through holes (212h). The protective member (500) includes a plurality of cylindrical portions (510) projecting through the through holes (212h), respectively, toward the panel member (230).

## Description

### CROSS REFERENCE TO RELATED APPLICATIONS

This nonprovisional application is based on Japanese Patent Application No. 2024-173314 filed on October 2, 2024 with the Japan Patent Office, the entire contents of which are hereby incorporated by reference.

### BACKGROUND

### Field

The present disclosure relates to a power storage device.

### Description of the Background Art

For example, Japanese National Patent Publication No. 2024-501935 discloses an electric device comprising a plurality of battery cells, a first box that accommodates the plurality of battery cells, a second box that accommodates the first box, and an isolation member provided in the second box. The isolation member supports the first box at a level higher than a bottom surface of the second box. A collection cavity is formed in the second box below the isolation member. The battery cell includes a housing having a lower surface provided with a third weakened zone, the first box has a bottom surface provided with a pressure relief region, and the isolation member is provided with a second weakened zone. The second weakened zone is made of a material having a lower melting point than a zone of the isolation member other than the second weakened zone. The battery cell discharges emissions through the third weakened zone which in turn pass through the pressure relief region and the second weakened zone and thus flow into the collection cavity formed below the isolation member.

### SUMMARY

There is a concern for the electric device described in Japanese National Patent Publication No. 2024-501935, that is, when one battery cell discharges emissions containing a gas, the gas may come into contact with a lower surface of a battery cell adjacent to one power storage cell.

An object of the present disclosure is to provide a power storage device capable of preventing emissions discharged from a power storage cell from coming into contact with a safety valve of an adjacent power storage cell.

In one aspect of the present disclosure, a power storage device comprises: a plurality of power storage cells disposed in one direction; a bottom wall disposed below the plurality of power storage cells; a panel member provided below the bottom wall and cooperating with the bottom wall to define an emission path; and a protective member provided at the bottom wall, wherein the plurality of power storage cells each have a lower surface provided with a safety valve, the bottom wall has a plurality of through holes each provided at a position facing the safety valve, and the protective member includes a plurality of cylindrical portions projecting through the plurality of through holes, respectively, toward the panel member.

The foregoing and other objects, features, aspects, and advantages of the present disclosure will become apparent from the following detailed description of the present disclosure when taken in conjunction with the accompanying drawings.

### BRIEF DESCRIPTION OF THE DRAWINGS

Fig. 1 is a diagram schematically showing a vehicle comprising a power storage device according to an embodiment of the present disclosure.
Fig. 2 is a perspective view schematically showing the power storage device.
Fig. 3 is a plan view schematically showing the power storage device with an upper cover removed.
Fig. 4 is a cross section taken along a line IV-IV indicated in Fig. 3.
Fig. 5 is a cross section taken along a line V-V indicated in Fig. 3.
Fig. 6 is a perspective view schematically showing a protective member.
Fig. 7 is a cross section schematically showing the protective member.
Fig. 8 is a cross section schematically showing a variation of the protective member.
Fig. 9 is a cross section schematically showing a variation of the protective member.
Fig. 10 is a perspective view schematically showing a variation of the protective member.
Fig. 11 is a perspective view schematically showing a variation of the protective member.
Fig. 12 is a cross section of the protective member shown in Fig. 11.
Fig. 13 is a perspective view schematically showing a variation of the protective member.
Fig. 14 is a cross section of the protective member shown in Fig. 13.
Fig. 15 is a cross section schematically showing a relationship between the protective member and a pillar element.
Fig. 16 is a plan view schematically showing the pillar element.
Fig. 17 is a cross section schematically showing a relationship between the protective member and the pillar element.
Fig. 18 is a plan view schematically showing the pillar element.

### DESCRIPTION OF THE PREFERRED EMBODIMENTS

An embodiment of the present disclosure will now be described with reference to the drawings. In the drawings referred to below, identical or equivalent components are identically denoted.

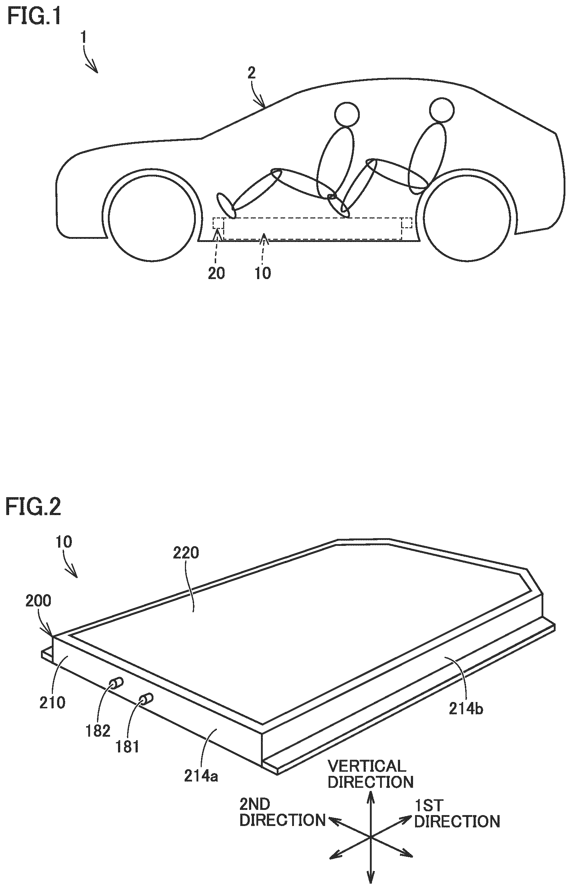

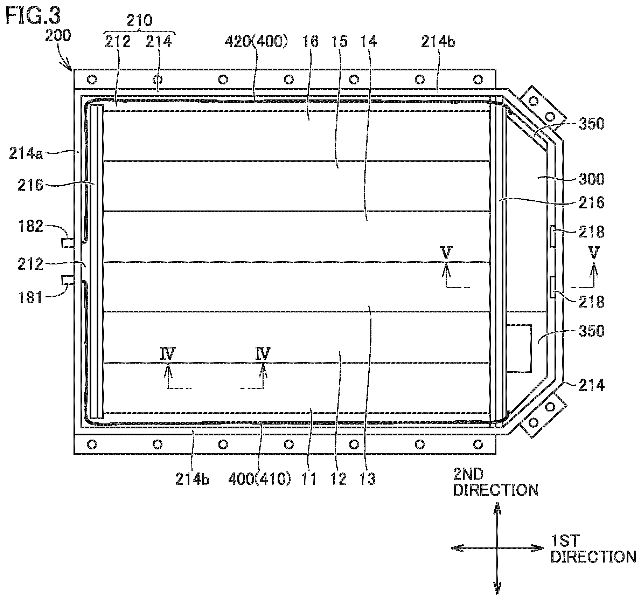

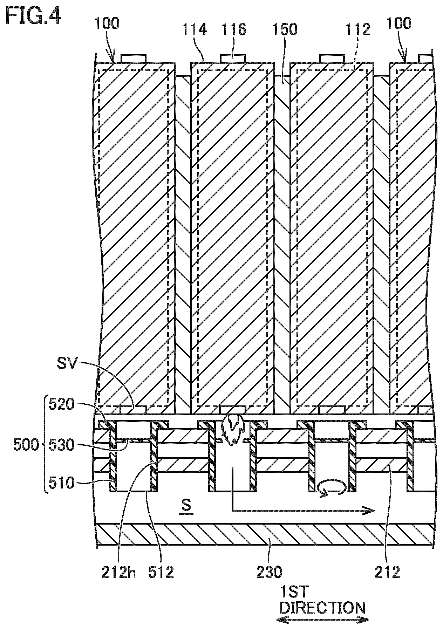

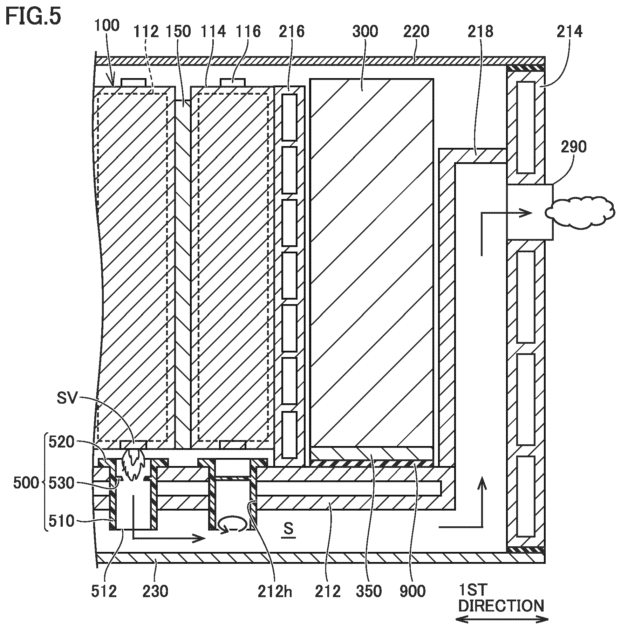

Fig. 1 is a diagram schematically showing a vehicle comprising a power storage device according to an embodiment of the present disclosure. Fig. 2 is a perspective view schematically showing the power storage device. Fig. 3 is a cross section taken along a line III-III indicated in Fig. 2. Fig. 4 is a cross section taken along a line IV-IV indicated in Fig. 3. Fig. 5 is a cross section taken along a line V-V indicated in Fig. 3.

As shown in Fig. 1, a vehicle 1 comprises a vehicular body 2 and a power storage device 10. Examples of vehicle 1 include a hybrid electric vehicle, a plug-in hybrid vehicle, and a battery electric vehicle.

As shown in Fig. 1, vehicular body 2 includes a frame member 20. Frame member 20 is disposed at a bottom portion of vehicular body 2. Frame member 20 is generally formed in a quadrangular hollow cylinder surrounding power storage device 10.

Power storage device 10 is attached to frame member 20. As shown in Figs. 1 to 5, power storage device 10 comprises six power storage stacks 11 to 16, a housing 200, a variety of types of devices 300, a device cooler 350, a coolant pipe 400, and a protective member 500. The power storage stack is not limited to six in number.

Power storage stacks 11 to 16 are each formed in a rectangular parallelepiped elongate in a first direction. As shown in Fig. 2, the six power storage stacks 11 to 16 are aligned in a second direction orthogonal to both the first direction and the vertical direction. Power storage stacks 11 to 16 each include a plurality of power storage cells 100 and a plurality of cooling plates 150.

The plurality of power storage cells 100 are aligned in the first direction. As shown in Fig. 4, each power storage cell 100 includes an electrode body 112, a cell casing 114, and a pair of external terminals 116.

Electrode body 112 may be configured by a wound body having a positive electrode sheet and a negative electrode sheet wound with a separator interposed or may be configured by a stack of a positive electrode sheet and a negative electrode sheet with a separator interposed. Electrode body 112 is formed in a shape elongate in the second direction.

Cell casing 114 accommodates electrode body 112. Cell casing 114 is formed in a rectangular parallelepiped. Cell casing 114 is made of metal such as aluminum. Cell casing 114 has a lower surface provided with a safety valve SV.

The pair of external terminals 116 is provided on an upper surface of cell casing 114. The paired external terminals 116 are provided at positions spaced from each other in a widthwise direction of cell casing 114. The widthwise direction corresponds to the second direction.

As shown in Figs. 4 and 5, each cooling plate 150 is disposed between a pair of power storage cells 100 adjacent to each other in the first direction. Each cooling plate 150 is formed in a flat plate elongate in the second direction. Each cooling plate 150 has a channel (not shown) to pass a coolant therethrough in the second direction.

Housing 200 houses the six power storage stacks 11 to 16. As shown in Figs. 4 and 5, housing 200 includes a lower case 210, an upper cover 220, and a panel member 230.

Lower case 210 is open upward. Lower case 210 may be formed of metal such as aluminum. Lower case 210 includes a bottom wall 212, a peripheral wall 214, and a pair of partition walls 216.

Bottom wall 212 is located below each of power storage stacks 11 to 16. In the present embodiment, bottom wall 212 is hollowed. Bottom wall 212 may be formed by extrusion. Bottom wall 212 may be formed in a solid and flat plate. As shown in Figs. 4 and 5, bottom wall 212 has a plurality of through holes 212h. Each through hole 212h is provided at a position facing safety valve SV.

Peripheral wall 214 stands from a peripheral portion of bottom wall 212. Peripheral wall 214 has a shape surrounding power storage stacks 11 to 16. Peripheral wall 214 may be hollowed. Peripheral wall 214 has a front wall 214a and a pair of side walls 214b.

Front wall 214a is formed on one side of each of power storage stacks 11 to 16 in the first direction (a left side in Fig. 3). Front wall 214a extends in the second direction. In the present embodiment, one side in the first direction corresponds to a front side of the vehicle in the longitudinal direction of the vehicle.

The paired side walls 214b are spaced from each other in the second direction and thus opposed to each other. Each side wall 214b extends in the first direction. Each side wall 214b has one end in the first direction (or a front end) contiguous to front wall 214a.

The pair of partition walls 216 partitions a space that is surrounded by bottom wall 212 and peripheral wall 214 into a space in which power storage stacks 11 to 16 are disposed and another space. The paired partition walls 216 are spaced from each other in the first direction. Each partition wall 216 extends in the second direction. Each partition wall 216 may be hollowed. The pair of partition walls 216 has a function of restraining power storage stacks 11 to 16 on opposite sides in the first direction. As shown in Fig. 3, partition wall 216 formed on one side in the first direction (or on the front side) has ends in the second direction each spaced from side wall 214b. Partition wall 216 formed on the other side in the first direction (or on a rear side) has ends in the second direction each contiguous to side wall 214b.

Upper cover 220 is disposed above power storage stacks 11 to 16. Upper cover 220 cooperates with lower case 210 to accommodate the six power storage stacks 11 to 16. Specifically, upper cover 220 cooperates with lower case 210 to enclose and thus accommodate the six power storage stacks 11 to 16. Upper cover 220 has a peripheral portion bolted or similarly connected to an upper end of peripheral wall 214 via a sealing member.

Panel member 230 is provided below lower case 210. Panel member 230 has a function of protecting bottom wall 212 of lower case 210. Panel member 230 may be formed in a flat plate. Panel member 230 has a peripheral portion connected to a lower surface of lower case 210 via a sealing member.

As shown in Figs. 4 and 5, a space S is formed between panel member 230 and bottom wall 212. Each space S functions as an emission path (hereinafter referred to as an "emission path S"). Emission path S is a path for discharging out of housing 200 a gas discharged from power storage cell 100 through safety valve SV.

As shown in Figs. 3 and 5, an emission duct 218 is formed at peripheral wall 214. Emission duct 218 extends upward from bottom wall 212. Emission duct 218 guides gas upward from emission path S. Emission duct 218 has a downstream end provided with an explosion-proof valve 290. Explosion-proof valve 290 releases the pressure inside housing 200. Explosion-proof valve 290 opens when the pressure inside housing 200 is equal to or higher than a reference value. Explosion-proof valve 290 includes a check valve. As shown in Fig. 5, when any power storage cell 100 discharges gas, the gas spreads in the first direction through emission path S and is discharged out of housing 200 through emission duct 218 and explosion-proof valve 290.

The variety of types of devices 300 are housed in housing 200. As shown in Fig. 3, the variety of types of devices 300 are disposed in a space formed between peripheral wall 214 and partition wall 216 formed on the other side of lower case 210 in the first direction, that is, on the other side in the first direction (or on the rear side). The variety of types of devices 300 may include a junction box. The variety of types of devices 300 may include a relay, a controller, etc.

Device cooler 350 cools the variety of types of devices 300. As shown in Figs. 3 and 5, device cooler 350 is provided between bottom wall 212 and the variety of types of devices 300. A thermally conductive adhesive 900 may be provided between device cooler 350 and bottom wall 212.

Coolant pipe 400 is routed in housing 200. Coolant pipe 400 leads to each cooling plate 150 and device cooler 350. As shown in Figs. 2 and 3, peripheral wall 214 at front wall 214a is provided with an inlet port 181 and an outlet port 182. Coolant pipe 400 is connected to inlet port 181 and outlet port 182. Inlet port 181 receives a coolant (water, oil, or the like) which in turn passes through coolant pipe 400, flows into each cooling plate 150 and device cooler 350, cools each power storage cell 100 and the variety of types of devices 300, and thereafter passes through coolant pipe 400 and thus flows out through outlet port 182.

As shown in Fig. 3, coolant pipe 400 includes an upstream pipe 410 and a downstream pipe 420.

Upstream pipe 410 has an upstream end connected to inlet port 181. Upstream pipe 410 has a downstream end connected to one end of device cooler 350 in the second direction. Upstream pipe 410 is routed to pass between front wall 214a and partition wall 216 formed on one side in the first direction and pass between power storage stack 11 and side wall 214b disposed on one side in the second direction. Upstream pipe 410 is connected to one end of each cooling plate 150 in the second direction.

Downstream pipe 420 has an upstream end connected to the other end of device cooler 350 in the second direction. Downstream pipe 420 has a downstream end connected to outlet port 182. Downstream pipe 420 is routed so as to pass between front wall 214a and partition wall 216 formed on one side in the first direction and pass between power storage stack 16 and side wall 214b disposed on the other side in the second direction. Downstream pipe 420 is connected to the other end of each cooling plate 150 in the second direction.

Protective member 500 is provided at bottom wall 212. Protective member 500 has a function of protecting each power storage cell 100 against the gas discharged through safety valve SV. Protective member 500 is made for example of synthetic resin. As shown in Figs. 4 to 7, protective member 500 includes a plurality of cylindrical portions 510, a plurality of flanges 520, and a plurality of closure portions 530.

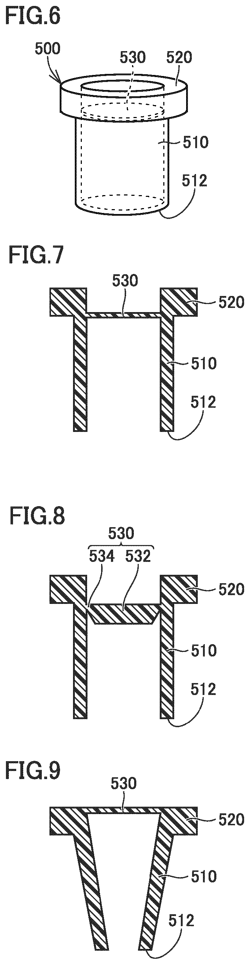

Cylindrical portions 510 project through through holes 212h, respectively, toward panel member 230. Cylindrical portion 510 has a lower end portion 512 spaced from panel member 230 upward. In the present embodiment, as shown in Fig. 6, cylindrical portion 510 is formed in a circular cylinder. However, cylindrical portion 510 is not particularly limited in shape in cross section. For example, cylindrical portion 510 may be formed in a quadrangular prism.

Flange 520 projects outward from an upper end portion of cylindrical portion 510. Flange 520 may be annularly formed. Flange 520 is geometrically larger than through hole 212h. Flange 520 is in contact with an upper surface of bottom wall 212. Flange 520 has a function of preventing cylindrical portion 510 from escaping from bottom wall 212 toward panel member 230.

Closure portion 530 closes cylindrical portion 510 internally. As shown in Fig. 7, closure portion 530 is smaller in thickness than cylindrical portion 510. Closure portion 530 is set to have a strength to be ruptured by gas-containing emissions discharged through safety valve SV.

When power storage device 10 described above has any power storage cell 100 shorted or the like and thus discharging emissions downward through safety valve SV, the emissions collide with closure portion 530. This ruptures closure portion 530, and the emissions flow into emission path S. Thereafter, the gas contained in the emissions spreads through emission path S and is discharged out of housing 200 through explosion-proof valve 290 as shown in Fig. 5.

Herein, when the gas having flowed into emission path S through cylindrical portion 510 spreads in emission path S, the gas forms a swirling stream in cylindrical portion 510 located below power storage cell 100 adjacent to power storage cell 100 having discharged the emissions (hereinafter referred to as an "adjacent power storage cell"), as shown in Figs. 4 and 5. Thus, the gas is prevented from moving upward through cylindrical portion 510 and coming into contact with safety valve SV of the adjacent power storage cell.

Furthermore, protective member 500 according to the present embodiment that includes closure portion 530 allows closure portion 530 to effectively interrupt the gas moving upward through cylindrical portion 510 located below the adjacent power storage cell.

Hereinafter, variations of the above embodiment will be described.

### <First Variation>

As shown in Fig. 8, closure portion 530 of protective member 500 may have a middle portion 532 and an edge portion 534.

Middle portion 532 is formed to be large in thickness. Middle portion 532 may be larger in thickness than cylindrical portion 510.

Edge portion 534 is formed to surround middle portion 532. Edge portion 534 interconnects middle portion 532 and cylindrical portion 510. Edge portion 534 is smaller in thickness than middle portion 532. Edge portion 534 is smaller in thickness than cylindrical portion 510.

In this aspect, when one power storage cell 100 discharges emissions, edge portion 534 is ruptured and middle portion 532 thereby falls, and the emissions flow into emission path S.

### <Second Variation>

As shown in Fig. 9, cylindrical portion 510 in a plane orthogonal to the vertical direction may have an area in cross section gradually decreasing toward panel member 230. For example, cylindrical portion 510 has a shape that gradually decreases in diameter as it is closer to panel member 230.

### <Third Variation>

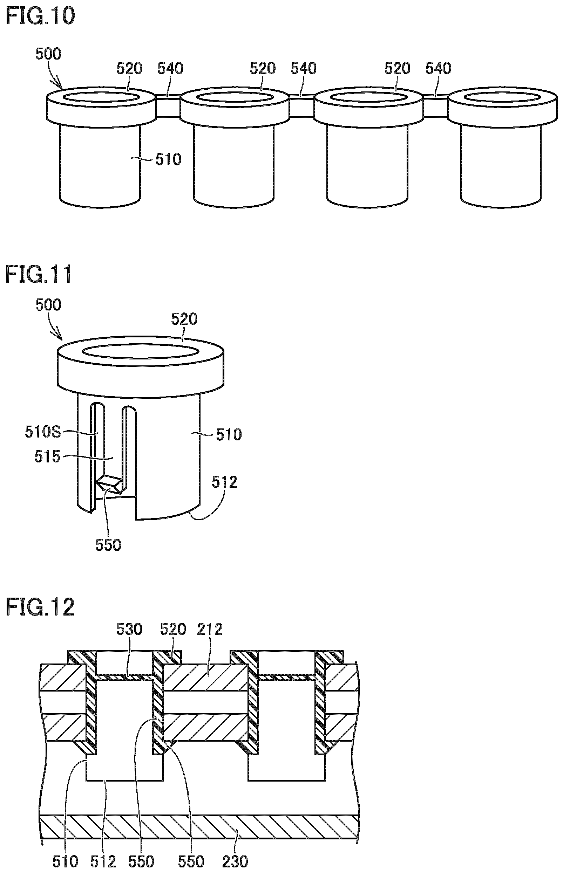

As shown in Fig. 10, protective member 500 may include a coupling portion 540 that couples a pair of cylindrical portions 510 or a pair of flanges 520 adjacent to each other in at least one of the first direction and the second direction. In the example shown in Fig. 10, coupling portion 540 couples together a pair of flanges 520 adjacent to each other.

### <Fourth Variation>

As shown in Figs. 11 and 12, protective member 500 may include a protrusion 550 protruding from an outer surface of cylindrical portion 510 outward in the radial direction of cylindrical portion 510.

In this example, cylindrical portion 510 has an arm 515. Arm 515 is formed between a pair of slits 510S provided to cylindrical portion 510. Each slit 510S extends from lower end portion 512 of cylindrical portion 510 upwards. Arm 515 is elastically deformable so that a lower end portion of arm 515 is displaced with respect to an upper end portion of arm 515 in the radial direction of cylindrical portion 510.

Protrusion 550 is provided on an outer surface of the lower end portion of arm 515. Protrusion 550 is located below bottom wall 212 and faces a lower surface of bottom wall 212. A length between a lower surface of flange 520 and an upper surface of protrusion 550 is set to be equal to or slightly larger than the thickness of bottom wall 212.

In this example, when cylindrical portion 510 is inserted into through hole 212h from above bottom wall 212, arm 515 is deformed so that protrusion 550 moves inward in the radial direction. When protrusion 550 reaches below bottom wall 212, arm 515 recovers its neutral state, and flange 520 and protrusion 550 together clamp bottom wall 212.

### <Fifth Variation>

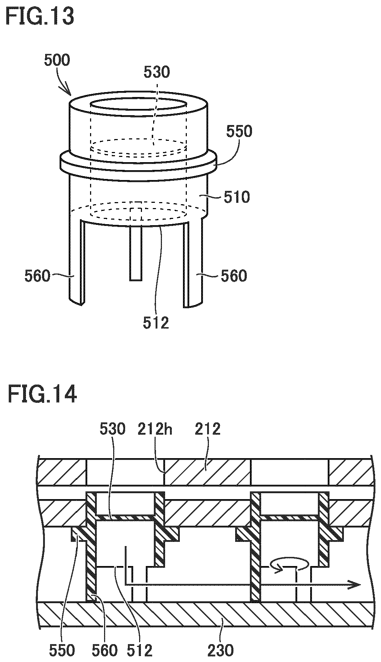

As shown in Figs. 13 and 14, protective member 500 may include protrusion 550 and a plurality of legs 560.

In this example, protrusion 550 has a shape protruding outward from an outer peripheral surface of cylindrical portion 510. Protrusion 550 may be formed in an annular shape. Protrusion 550 is provided on an outer peripheral surface of a middle portion of cylindrical portion 510 in the vertical direction. Protrusion 550 faces the lower surface of bottom wall 212.

The plurality of legs 560 extend downward from lower end portion 512 of cylindrical portion 510. Legs 560 are provided at positions spaced from one another in the circumferential direction of cylindrical portion 510. A length between a lower end portion of each leg 560 and the upper surface of protrusion 550 is set to be equal to or slightly smaller than a length between the lower surface of bottom wall 212 and an upper surface of panel member 230.

### <Sixth Variation>

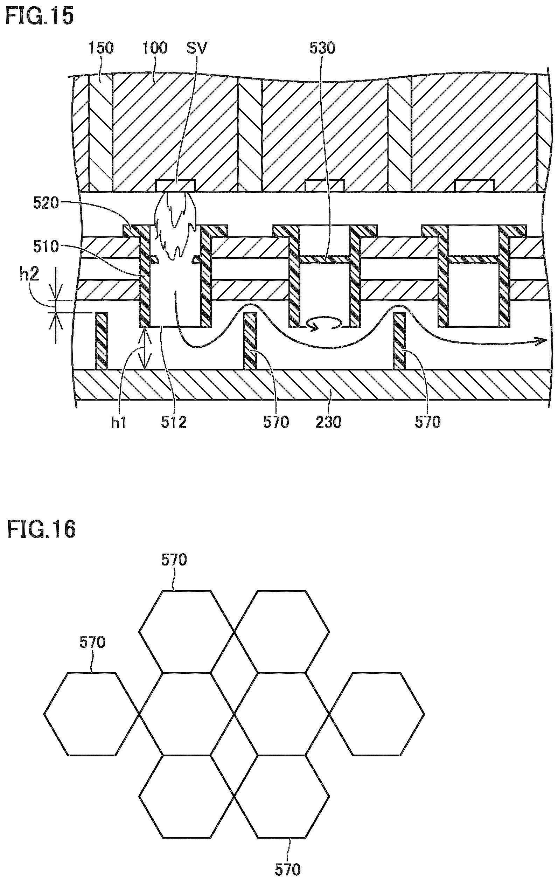

As shown in Figs. 15 and 16, power storage device 10 may comprise a pillar element 570. Pillar element 570 is disposed between bottom wall 212 and panel member 230. Pillar element 570 may be fixed on the upper surface of panel member 230. As shown in Fig. 15, a distance h2 between an upper end portion of pillar element 570 and the lower surface of bottom wall 212 is smaller than a distance h1 between the upper surface of panel member 230 and lower end portion 512 of cylindrical portion 510. As shown in Fig. 16, pillar element 570 may be formed in a hexagonal prism in plan view.

In this aspect, when one power storage cell 100 discharges emissions including a gas, the gas passes between pillar element 570 and bottom wall 212 and moves toward explosion-proof valve 290, as indicated in Fig. 15 by an arrow.

### <Seventh Variation>

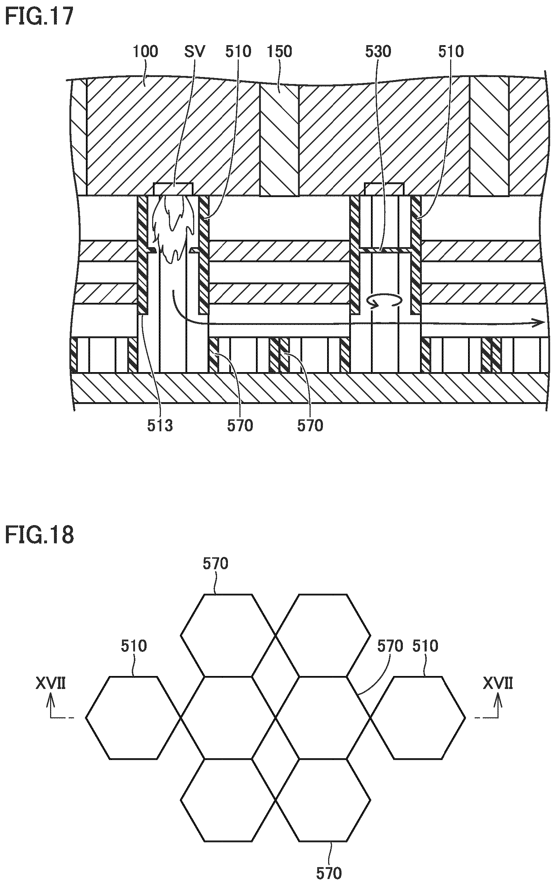

As shown in Figs. 17 and 18, power storage device 10 may comprise pillar element 570. Note that Fig. 17 shows a cross section at a position corresponding to a line XVII-XVII indicated in Fig. 18.

In this example, cylindrical portion 510 is formed in a hexagonal prism. Cylindrical portion 510 has a lower end portion in contact with panel member 230. Cylindrical portion 510 has a lower portion notched 513 to allow a gas to flow out of cylindrical portion 510.

Pillar element 570 is disposed between bottom wall 212 and panel member 230. Pillar element 570 may be fixed on the upper surface of panel member 230. Pillar element 570 has a height smaller than a distance between the lower surface of bottom wall 212 and the upper surface of panel member 230.

It will be understood by those skilled in the art that the exemplary embodiments described above are specific examples of the following aspects.

### [Aspect 1]

A power storage device comprising:
a plurality of power storage cells disposed in one direction;
a bottom wall disposed below the plurality of power storage cells;
a panel member provided below the bottom wall and cooperating with the bottom wall to define an emission space; and
a protective member provided at the bottom wall,
the plurality of power storage cells each having a lower surface provided with a safety valve,
the bottom wall having a plurality of through holes each provided at a position facing the safety valve,
the protective member including a plurality of cylindrical portions projecting through the plurality of through holes, respectively, toward the panel member.

When the present power storage device has one power storage cell discharging emissions containing a gas which in turn pass through a cylindrical portion and flow into an emission space, the gas forms a swirling stream in a cylindrical portion disposed below a power storage cell adjacent to one power storage cell. Thus, the gas is prevented from moving upward through the cylindrical portion and coming into contact with the safety valve of the adjacent power storage cell.

### [Aspect 2]

The power storage device according to Aspect 1, wherein the protective member further includes a closure portion that closes the cylindrical portion internally.

In this aspect, the gas discharged from one power storage cell ruptures the closure portion and thus effectively flows into the emission space, whereas the gas moving from the emission space upward toward another power storage cell through the cylindrical portion is effectively interrupted by the closure portion.

### [Aspect 3]

The power storage device according to Aspect 1 or 2, wherein each cylindrical portion in a plane orthogonal to a vertical direction has an area in cross section gradually decreasing toward the panel member.

This aspect more reliably prevents a gas from flowing into the cylindrical portion from below the cylindrical portion.

### [Aspect 4]

The power storage device according to any one of Aspects 1 to 3, wherein the protective member includes a coupling portion that couples together the cylindrical portion and another cylindrical portion adjacent thereto in the one direction and paired therewith.

This aspect facilitates handling the plurality of cylindrical portions.

### [Aspect 5]

The power storage device according to any one of Aspects 1 to 4, wherein
the protective member includes a protrusion protruding from an outer surface of the cylindrical portion, and
the protrusion is located below the bottom wall and faces the bottom wall.

In this aspect, even when the panel member receives an external force (or a load pushing upward) acting thereto from below and thus comes into contact with the cylindrical portion of the protective member, the protrusion abuts against the bottom wall from below and thus prevents the protective member from escaping upward from the bottom wall. This prevents the protective member from colliding against a lower surface of the power storage cell.

### [Aspect 6]

The power storage device according to any one of Aspects 1 to 5, further comprising a pillar element disposed between the bottom wall and the panel member, wherein a distance between the pillar element and the bottom wall is smaller than a distance between the panel member and the cylindrical portion.

In this aspect, when the panel member receives an external force (or a load pushing upward) acting thereto from below, then, before the panel member comes into contact with the cylindrical portion, the pillar element abuts against the bottom wall and the panel member, and this prevents the protective member from escaping upward from the bottom wall. This prevents the protective member from colliding against a lower surface of the power storage cell.

Although some embodiments of the present disclosure have been described, it is clearly understood that the embodiments are by way of illustration and example only and not to be taken by way of limitation. The scope of the present disclosure is defined by the terms of the appended claims, and intended to encompass any modification that falls within the meaning and scope equivalent to the terms of the claims.

## Claims

1. A power storage device (10) comprising:
a plurality of power storage cells (100) disposed in one direction;
a bottom wall (212) disposed below the plurality of power storage cells (100);
a panel member (230) provided below the bottom wall (212) and cooperating with the bottom wall (212) to define an emission path; and
a protective member (500) provided at the bottom wall (212),
the plurality of power storage cells (100) each having a lower surface provided with a safety valve (SV),
the bottom wall (212) having a plurality of through holes (212h) each provided at a position facing the safety valve (SV),
the protective member (500) including a plurality of cylindrical portions (510) projecting through the plurality of through holes (212h), respectively, toward the panel member (230).

2. The power storage device (10) according to claim 1, wherein the protective member (500) further includes a closure portion (530) that closes the cylindrical portion (510) internally.

3. The power storage device (10) according to claim 1 or 2, wherein each cylindrical portion (510) in a plane orthogonal to a vertical direction has an area in cross section gradually decreasing toward the panel member (230).

4. The power storage device (10) according to any one of claims 1 to 3, wherein the protective member (500) includes a coupling portion (540) that couples together the cylindrical portion (510) and another cylindrical portion (510) adjacent thereto in the one direction and paired therewith.

5. The power storage device (10) according to any one of claims 1 to 4, wherein
the protective member (500) includes a protrusion (550) protruding from an outer surface of the cylindrical portion (510), and
the protrusion (550) is located below the bottom wall (212) and faces the bottom wall (212).

6. The power storage device (10) according to any one of claims 1 to 5, further comprising a pillar element (570) disposed between the bottom wall (212) and the panel member (230), wherein a distance (h2) between the pillar element (570) and the bottom wall (212) is smaller than a distance (h1) between the panel member (230) and the cylindrical portion (510).
